# FASCICULE DE BREVET EUROPEEN

(11) **EP 1 801 389 B1**
(45) Date de publication et mention de la délivrance du brevet: **20.08.2008**
(21) Numéro de dépôt: 05292778.7
(22) Date de dépôt: 23.12.2005
(51) Int. Cl.: F02C 7/047, F02C 7/04, B64C 11/14, F02C 7/045

(54) **Isolation acoustique d'un stator de compresseur basse pression**
Akoustische Isolierung des Stators eines Niederdruckverdichters
Acoustic isolation of the stator of a low pressure compressor

(43) Date de publication de la demande: 27.06.2007
(73) Titulaire: Techspace Aero, 4041 Milmort - Herstal (BE)
(72) Inventeur: Lhoest, André, 4500 Huy (BE); Duchaine, Georges, 4608 Warsage (BE)
(74) Mandataire: Barbin le Bourhis, Joël

(56) Documents cités:
- EP-A- 1 016 588
- GB-A- 2 364 748
- US-A1- 2003 035 719

## Description

L'invention se rapporte à un stator de compresseur basse pression installé à l'entrée d'un turboréacteur double flux ; elle concerne plus particulièrement le montage des panneaux d'isolation acoustique, ci-après dénommés panneaux acoustiques, installés à l'extérieur du carter dudit stator dans le prolongement du nez de séparation annulaire qui sépare un flux primaire (pour l'alimentation du compresseur) d'un flux secondaire de soufflante.

Dans un turboréacteur double flux, le compresseur basse pression est placé coaxialement à la soufflante, juste en aval des pales du rotor de celle-ci. L'air se partage en un flux primaire qui alimente le compresseur et en un flux secondaire (celui de la soufflante) radialement à l'extérieur du flux primaire.

Le carter du stator du compresseur assure donc le partage de ces deux flux. Pour ce faire, l'extrémité annulaire d'entrée dudit stator est équipée d'un bec de séparation profilé à cet effet, généralement en titane ou en aluminium. Cet élément est souvent équipé d'un système de dégivrage chauffant.

Le carter du stator se compose d'une virole, du côté du flux secondaire constituée par des panneaux acoustiques précités et d'une virole métallique du côté du flux primaire, le bec de séparation établissant la jonction entre ces deux viroles. Ces panneaux sont en matériau composite et, en raison de leur structure ils ne sont pas directement boulonnables sur le carter.

L'une des solutions pour fixer un tel panneau est de placer des inserts rigides dans les trous de passage des vis des boulons. Les efforts de boulonnage sont supportés par ces inserts.

Par exemple, EP 1 405 986 décrit un système d'assemblage où la virole métallique du carter est munie de bossages eux-mêmes équipés d'inserts filetés. Les vis de montage des panneaux acoustiques sont vissées dans de tels bossages.

Les bossages sont difficiles à réaliser sur la virole métallique du carter et augmentent la masse de celui-ci. Selon US 2003/0035719 chaque panneau, muni d'inserts, est assemblé à une pièce rapportée à la virole métallique du carter. Celle-ci alourdit ledit carter et l'assemblage est difficile.

L'invention propose une solution permettant d'éviter les bossages ou la pièce rapportée.

Plus précisément l'invention concerne un stator de compresseur basse pression de turboréacteur double flux, du type comprenant un carter de compresseur installé axialement à l'intérieur d'un carter de soufflante et comportant, à son extrémité avant, un bec de séparation profilé pour séparer les flux primaire et secondaire, des panneaux acoustiques étant montés à l'extérieur du carter dans le prolongement dudit bec de séparation, caractérisé en ce que ledit bec de séparation comporte un épaulement jouxtant une portée de montage prolongée par une bride annulaire interne, elle-même assemblée à une bride annulaire externe de la virole métallique du carter, en ce que chaque panneau acoustique repose sur ladite portée de montage et/ou ladite bride annulaire externe et en ce que des moyens de fixation sont prévus entre ledit panneau et ladite portée de montage dudit bec de séparation.

Entre autres avantages, le système décrit ci-dessus est plus compact et plus léger. Il procure une augmentation de la raideur du carter qui doit conserver une forme la plus concentrique possible et éviter une déformation en ovalisation. L'usinage du carter est simplifié. Enfin, l'assemblage des panneaux avec le carter est facilité.

Les moyens de fixation peuvent être des boulons, chaque panneau étant directement boulonné sur ladite portée de montage du bec de séparation. Dans ce cas, chaque panneau peut comporter des inserts métalliques, chacun étant conformé pour recevoir une vis d'un boulon précité.

Selon une variante les panneaux sont maintenus par l'intermédiaire de pièces de serrage fixées à la portée de montage.

L'invention sera mieux comprise et d'autres avantages de celle-ci apparaîtront plus clairement à la lumière de la description qui va suivre de plusieurs modes de réalisation d'un stator conforme à son principe, donnée uniquement à titre d'exemple et faite en référence aux dessins annexés dans lesquels :
- la figure 1 est une vue schématique partielle en coupe, de la partie avant d'un turboréacteur à double flux équipé d'un compresseur basse pression conforme à l'invention ;
- la figure 2 est une vue analogue à la figure 1 illustrant une variante ;
- la figure 3 est une vue selon la flèche III de la figure 2 ; et
- la figure 4 est une vue semblable à la figure 3, illustrant une autre variante.

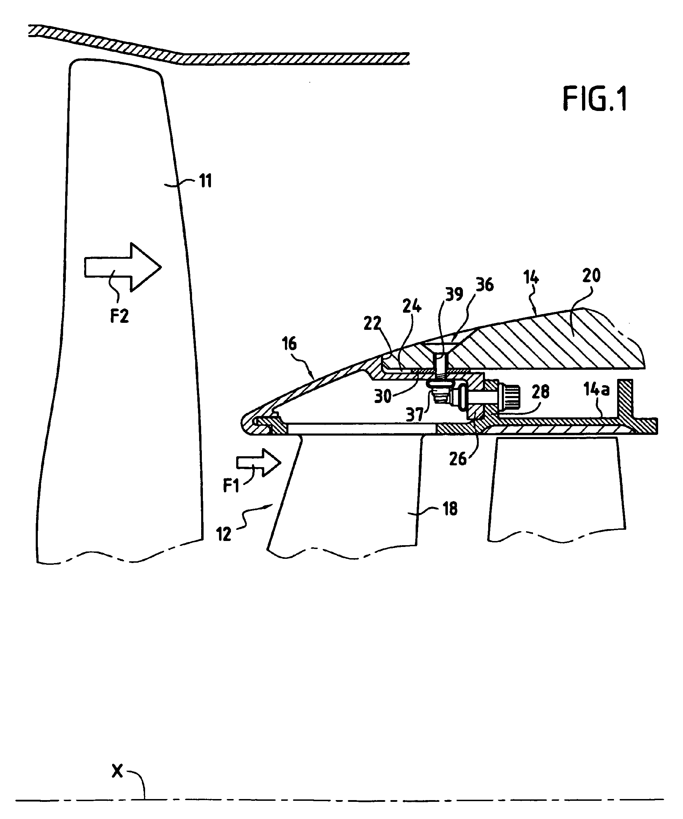

En considérant plus particulièrement la figure 1, on distingue les pales 11 de la soufflante d'un turboréacteur double flux et, immédiatement en aval de celles-ci, les étages d'entrée d'un compresseur basse pression 12. La soufflante et le compresseur sont coaxiaux, d'axe x. Le carter extérieur 14 du stator du compresseur partage l'écoulement d'air en un flux primaire F₁ alimentant le compresseur et en un flux secondaire F₂ fournissant la poussée due à la soufflante.

L'avant du compresseur est muni d'un bec séparateur 16 annulaire, qui s'étend tout autour d'un étage d'aubes de redresseur 18, fixes. Ce bec est profilé pour séparer les flux primaire et secondaire. Au voisinage immédiat dudit bec de séparation, en aval de celui-ci, des panneaux acoustiques 20, chacun en forme de secteur courbe profilé, sont disposés côte à côte, circonférentiellement, pour définir, à l'extérieur du carter et dans le prolongement du bec de séparation, une virole d'isolation phonique.

L'invention concerne plus particulièrement le montage de ces panneaux acoustiques.

A cet effet, le bec de séparation 16 comporte un épaulement 22 jouxtant une portée de montage 24 de plus faible diamètre, prolongée par une bride annulaire interne 26 elle-même assemblée à une bride annulaire externe 28 du carter 14 (plus particulièrement une virole 14a, intérieure, de celui-ci), par des boulons. Chaque panneau acoustique 20 repose sur ladite portée de montage 24 et/ou ladite bride annulaire externe 28. Dans l'exemple de la figure 1, le panneau acoustique repose sur la portée de montage 24 par l'intermédiaire d'une entretoise d'isolation thermique 30. En effet, le bec de séparation comporte des moyens de dégivrage, chauffants, (non représentés) et l'entretoise d'isolation thermique évite la propagation de la chaleur par conduction dans le panneau acoustique.

Des moyens de fixation sont prévus entre ledit panneau et ladite portée de montage dudit bec de séparation.

Dans les exemples décrits, la portée de montage 24 est cylindrique.

Dans l'exemple de la figure 1, les moyens de fixation sont des boulons 36. Les écrous 37 de ces boulons sont montés à la face inférieure de la portée de montage 24, en regard de trous pratiqués dans celle-ci.

Avantageusement, se sont des écrous à rivets, fixés à la face interne de ladite portée de montage. Chaque panneau est ainsi directement boulonné sur ladite portée de montage. Cependant, pour les raisons indiquées ci-dessus, chaque panneau comporte des inserts tubulaires 39, métalliques, chacun étant conformé pour recevoir une vis d'un tel boulon.

Dans les autres modes de réalisation, les panneaux sont maintenus par l'intermédiaire de pièces de serrage 42, 42a fixées à ladite portée de montage. Celle-ci peut être équipée d'écrous à rivets, comme dans l'exemple précédent.

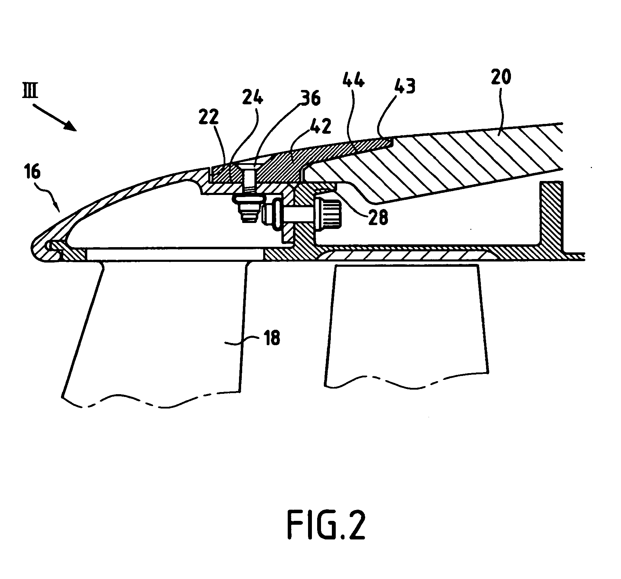

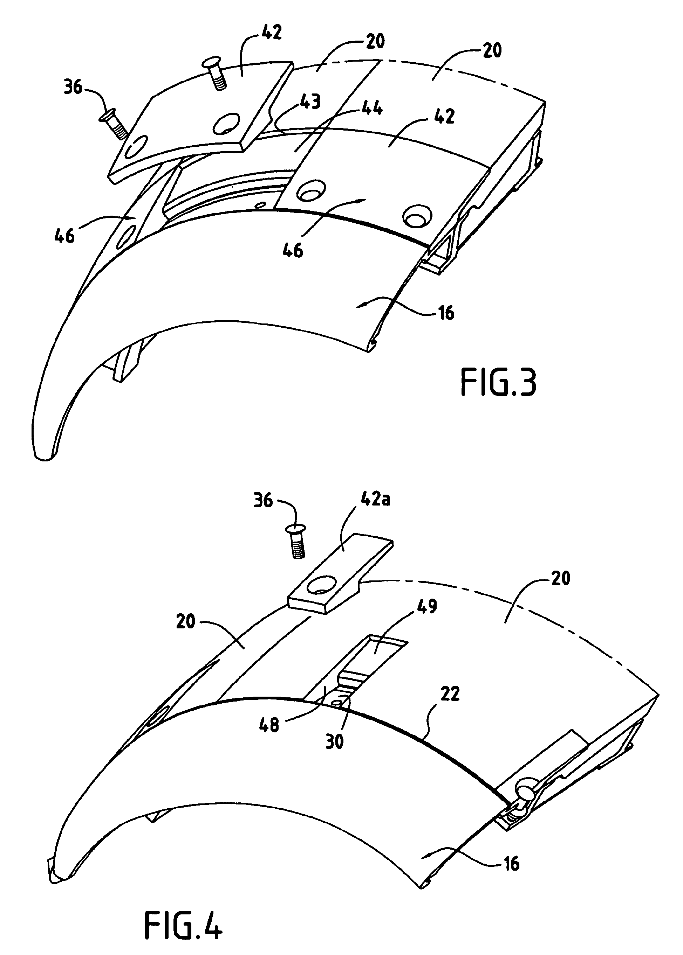

Ainsi, dans l'exemple des figures 2 et 3, les extrémités des panneaux sont munies d'épaulements 43 et définissent ensemble une portée de serrage 44, annulaire. Les extrémités des panneaux arrivent au contact de l'épaulement 22 du bec de séparation de sorte que entre les deux épaulements 22, 43 se trouve définie une région de plus faible diamètre, adaptée pour accueillir les pièces de serrage 42. Ces pièces de serrage (ayant ici une forme de secteur courbe) reconstituent côte à côte un anneau de serrage 46 s'étendant entre l'épaulement 22 de ladite portée de montage du bec de séparation et l'épaulement 43 de la portée de serrage. Le profil d'une telle pièce de serrage est tel que la surface extérieure de l'anneau de serrage se trouve sensiblement en affleurement avec celle dudit bec de séparation et celle dudit panneau acoustique, au delà de l'épaulement 43.

Dans le mode de réalisation de la figure 4, chaque panneau acoustique 20 s'étend jusqu'à l'épaulement 22 du bec de séparation et comporte, pour chaque boulon, une découpe 48 et une creusure plate 49 adjacente à ladite découpe.

Une pièce de serrage 42a en forme de patte vient s'encastrer dans l'espace défini par ladite découpe et par ladite creusure adjacente. Bien entendu, le profil de cette pièce de serrage est tel que sa surface extérieure soit en affleurement avec celle dudit bec de séparation et celle du panneau acoustique.

Dans les deux derniers modes de réalisation décrits, les pièces de serrages 42, 42a sont fixées par boulonnage au bec de séparation 16 mais maintiennent les panneaux acoustiques en application contre celui-ci et/ou contre la bride annulaire 28 en répartissant l'effort de serrage sur une surface relativement importante pour éviter toute détérioration des panneaux acoustiques.

Dans ces modes de réalisation, le panneau prend essentiellement appui sur la bride annulaire externe 28 du carter, ce qui limite son échauffement par conduction thermique lorsque le bec de séparation est en période de dégivrage. Des entretoises d'isolation thermique peuvent être intercalées entre les pièces de serrage (42, 42a) d'une part et la bride 28 et/ou la portée de montage 24, si nécessaire.

Bien entendu, l'invention concerne également tout compresseur basse pression de turboréacteur double flux conforme à la description qui précède. L'invention concerne enfin tout turboréacteur double flux équipé d'un tel compresseur.

## Revendications

1. Stator de compresseur basse pression de turboréacteur double flux, du type comprenant un carter de compresseur installé axialement à l'intérieur d'un carter de soufflante et comportant, à son extrémité avant, un bec de séparation (16) profilé pour séparer des flux primaire et secondaire, des panneaux acoustiques (20) étant montés à l'extérieur du carter dans le prolongement dudit bec de séparation, **caractérisé en ce que** ledit bec de séparation comporte un épaulement jouxtant une portée de montage (24) prolongée par une bride annulaire interne (26), elle-même assemblée à une bride annulaire externe (28) du carter, **en ce que** chaque panneau acoustique (20) repose sur ladite portée de montage et/ou ladite bride annulaire externe et **en ce que** des moyens de fixation sont prévus entre ledit panneau et ladite portée de montage dudit bec de séparation.

2. Stator selon la revendication 1, **caractérisé en ce que** ladite portée de montage (24) est cylindrique.

3. Stator selon la revendication 1 ou 2, **caractérisé en ce que** lesdits moyens de fixation sont des boulons, chaque panneau (20) étant directement boulonné sur ladite portée de montage (24).

4. Stator selon la revendication 3, **caractérisé en ce que** chaque panneau comporte des inserts (39), chacun étant conformé pour recevoir une vis d'un boulon précité.

5. Stator selon la revendication 3 ou 4, **caractérisé en ce que** des écrous (37) desdits boulons sont montés à la face intérieure de ladite portée de montage, en regard de trous pratiqués dans celle-ci, chaque écrou coopérant avec une vis de boulon précité.

6. Stator selon la revendication 5, **caractérisé en ce que** lesdits écrous (37) sont des écrous à rivet, fixés à ladite portée de montage.

7. Stator selon l'une des revendications3 à 6, **caractérisé en ce que** chaque panneau (20) prend appui sur ladite portée de montage par I intermédiaire d'une entretoise d'isolation thermique (30).

8. Stator selon la revendication 1 ou 2, **caractérisé en ce que** lesdits panneaux sont maintenus par l'intermédiaire de pièces de serrage (42, 42a) fixées à ladite portée de montage (24).

9. Stator selon la revendication 8, **caractérisé en ce que** les extrémités des panneaux sont munies d'épaulements définissant ensemble une portée de serrage annulaire (44) et **en ce que** lesdites pièces de serrage reconstituent côte à côte un anneau de serrage (46) s'étendant entre l'épaulement (22) de ladite portée de montage du bec de séparation et celui (43) de ladite portée de serrage.

10. Stator selon la revendication 9, **caractérisé en ce que** le profil d'une telle pièce de serrage est tel que la surface extérieure dudit anneau de serrage soit sensiblement en affleurement avec celle dudit bec de séparation et celle dudit panneau acoustique.

11. Stator selon la revendication 8, **caractérisé en ce que** chaque panneau acoustique s'étend jusqu'à l'épaulement (22) du bec de séparation et comporte, pour chaque boulon, une découpe (48) et une creusure plate (49) adjacente à ladite découpe et **en ce que** une pièce de serrage (42a) en forme de patte vient s'encastrer dans l'espace défini par ladite découpe et ladite creusure adjacente.

12. Stator selon la revendication 11, **caractérisé en ce que** ledit panneau (20) prend essentiellement appui sur ladite bride annulaire externe dudit carter.

13. Stator selon la revendication 11 ou 12, **caractérisé en ce que** le profil d'une telle pièce de serrage est tel que sa surface extérieure soit en affleurement avec celle dudit bec de séparation et celle dudit panneau acoustique.

14. Bec de séparation pour stator de compresseur selon l'une des revendications précédentes, **caractérisé en ce qu'**il comporte un épaulement jouxtant une portée de montage (24) pour panneau acoustique.

15. Compresseur basse pression de turboréacteur double flux, **caractérisé en ce qu'**il comporte un stator selon l'une des revendications 1 à 13.

16. Turboréacteur double flux **caractérisé en ce qu'**il comporte un compresseur basse pression selon la revendication 15.

## Claims

1. Low-pressure compressor stator for turbofan engine of the type comprising a compressor case installed axially inside a fan case and comprising a profiled splitter (16) at its forward end to separate the primary and secondary airflows, acoustic panels (20) being mounted outside the case in the continuation of said splitter, **characterized in that** said splitter comprises a shoulder adjoining a mounting surface (24) extended by an inner annular flange (26), itself assembled onto an outer annular flange (28) of the case, **in that** each acoustic panel (20) bears upon said mounting surface and/or said outer annular flange, and **in that** attachment means are provided between said panel and said mounting surface of said splitter.

2. Stator according to claim 1, **characterized in that** said mounting surface (24) is cylindrical.

3. Stator according to claim 1 or 2, **characterized in that** said attachment means are bolts, each panel (20) being directly bolted onto said mounting surface (24).

4. Stator according to claim 3, **characterized in that** each panel comprises inserts (39), each being conformed to receive a screw of an above-mentioned bolt.

5. Stator according to claim 3 or 4, **characterized in that** nuts (37) of said bolts are mounted on the inner surface of said mounting surface, facing holes made therein, each nut cooperating with an above-mentioned bolt screw.

6. Stator according to claim 5, **characterized in that** said nuts (37) are rivet nuts, fixed to said mounting surface.

7. Stator according to any of claims 3 to 6, **characterized in that** each panel (20) bears upon said mounting surface via a heat insulation spacer (30).

8. Stator according to claim 1 or 2, **characterized in that** said panels are held in position via clamping parts (42, 42a) fixed to said mounting surface (24).

9. Stator according to claim 8, **characterized in that** the ends of the panels are provided with shoulders together defining an annular clamping surface (44), and **in that** said clamping parts side by side form a clamping ring (46) extending between the shoulder (22) of said mounting surface of the splitter and that (43) of said clamping surface.

10. Stator according to claim 9, **characterized in that** the profile of said clamping part is such that the outer surface of said clamping ring substantially lies flush with the outer surface of said splitter and that of said acoustic panel.

11. Stator according to claim 8, **characterized in that** each acoustic panel extends as far as the shoulder (22) of the splitter and, for each bolt, comprises a cut-out (48) and a flat hollow (49) adjacent said cut-out, and **in that** a lug-shaped clamping part (42a) fits into the space defined by said cut-out and said adjacent hollow.

12. Stator according to claim 11, **characterized in that** said panel (20) bears essentially upon said outer annular flange of said case.

13. Stator according to claim 11 or 12, **characterized in that** the profile of said clamping part is such that its outer surface lies flush with the outer surface of said splitter and that of said acoustic panel.

14. Splitter for compressor stator according to any of the preceding claims, **characterized in that** it comprises a shoulder adjoining a mounting surface (24) for acoustic panel.

15. Low-pressure compressor for turbofan engine, **characterized in that** it comprises a stator according to any of claims 1 to 13.

16. Turbofan engine **characterized in that** it comprises a low-pressure compressor according to claim 15.

## Patentansprüche

1. Stator eines Niederdruckverdichters eines Zweistrom-Turbostrahltriebwerks, von der Art umfassend ein Verdichtergehäuse, das innerhalb eines Gebläsegehäuses axial eingebaut ist und das an seinem vorderen Ende eine profilierte Trennase (16) aufweist, um Primär- und Sekundärstrom zu trennen, wobei Akustikplatten (20) außerhalb des Gehäuses in der Verlängerung der Trennase angebracht sind, **dadurch gekennzeichnet, daß** die Trennase eine Schulter aufweist, die an eine Montagefläche (24) angrenzt, welche durch einen ringförmigen Innenflansch (26) verlängert ist, der seinerseits mit einem ringförmigen Außenflansch (28) des Gehäuses verbunden ist, daß jede Akustikplatte (20) auf der Montagefläche und/oder dem ringförmigen Außenflansch aufliegt und daß Befestigungsmittel zwischen der Platte und der Montagefläche der Trennase vorgesehen sind.

2. Stator nach Anspruch 1, **dadurch gekennzeichnet, daß** die genannte Montagefläche (24) zylindrisch ist.

3. Stator nach Anspruch 1 oder 2, **dadurch gekennzeichnet, daß** die Befestigungsmittel Bolzen sind, wobei jede Platte (20) direkt mittels Bolzen an der Montagefläche (24) befestigt ist.

4. Stator nach Anspruch 3, **dadurch gekennzeichnet, daß** jede Platte Einsätze (39) aufweist, wobei ein jeder für die Aufnahme einer Schraube eines vorgenannten Bolzens ausgebildet ist.

5. Stator nach Anspruch 3 oder 4, **dadurch gekennzeichnet, daß** Muttern (37) der Bolzen an der Innenseite der Montagefläche, gegenüber von in dieser ausgebildeten Löchern angebracht sind, wobei jede Mutter mit einer Schraube eines vorgenannten Bolzens zusammenwirkt.

6. Stator nach Anspruch 5, **dadurch gekennzeichnet, daß** die Muttern (37) Nietmuttern sind, die an der Montagefläche befestigt sind.

7. Stator nach einem der Ansprüche 3 bis 6, **dadurch gekennzeichnet, daß** jede Platte (20) sich an der Montagefläche mittels eines Wärmeisolierstegs (30) abstützt.

8. Stator nach Anspruch 1 oder 2, **dadurch gekennzeichnet, daß** die Platten mit Hilfe von an der Montagefläche (24) befestigten Klemmteilen (42, 42a) gehalten werden.

9. Stator nach Anspruch 8, **dadurch gekennzeichnet, daß** die Enden der Platten mit Schultern versehen sind, die gemeinsam eine ringförmige Klemmfläche (44) definieren, und daß die Klemmteile nebeneinanderliegend einen Klemmring (46) ausbilden, der sich zwischen der Schulter (22) der Montagefläche der Trennase und derjenigen (43) der Klemmfläche erstreckt.

10. Stator nach Anspruch 9, **dadurch gekennzeichnet, daß** das Profil eines solchen Klemmteils derart ist, daß die Außenfläche des Klemmrings mit derjenigen der Trennase und derjenigen der Akustikplatte im wesentlichen fluchtet.

11. Stator nach Anspruch 8, **dadurch gekennzeichnet, daß** jede Akustikplatte sich bis zur Schulter (22) der Trennase erstreckt und für jeden Bolzen einen Ausschnitt (48) sowie eine dem Ausschnitt benachbarte flache Einsenkung (49) aufweist, und daß sich ein laschenförmiges Klemmteil (42a) in den durch den Ausschnitt und die benachbarte Einsenkung definierten Raum einfügt.

12. Stator nach Anspruch 11, **dadurch gekennzeichnet, daß** die Platte (20) sich im wesentlichen an dem ringförmigen Außenflansch des Gehäuses abstützt.

13. Stator nach Anspruch 11 oder 12, **dadurch gekennzeichnet, daß** das Profil eines solchen Klemmteils derart ist, daß dessen Außenfläche mit derjenigen der Trennase und derjenigen der Akustikplatte fluchtet.

14. Trennase für einen Stator eines Verdichters nach einem der vorhergehenden Ansprüche, **dadurch gekennzeichnet, daß** sie eine Schulter aufweist, die an eine Montagfläche (24) für Akustikplatten angrenzt.

15. Niederdruckverdichter eines Zweistrom-Turbostrahltriebwerks, **dadurch gekennzeichnet, daß** er einen Stator nach einem der Ansprüche 1 bis 13 umfaßt.

16. Zweistrom-Turbostrahltriebwerk **dadurch gekennzeichnet, daß** es einen Niederdruckverdichter nach Anspruch 15 aufweist.
